Europäisches Patentamt

European Patent Office

Office européen des brevets

(11) Veröffentlichungsnummer: **0 292 646**
**B1**

# EUROPÄISCHE PATENTSCHRIFT

(45) Veröffentlichungstag der Patentschrift:
**07.03.90**

(51) Int. Cl.⁴: **B29C 47/12**

(21) Anmeldenummer: 88102505.0

(22) Anmeldetag: **20.02.88**

(54) **Strangpresswerkzeug zum Strangpressen eines marmorierten Profils aus thermoplastischem Kunststoff, Stichwort Düsenfinger.**

(30) Priorität: **27.05.87 DE 3717967**

(43) Veröffentlichungstag der Anmeldung:
**30.11.88 Patentblatt 88/48**

(45) Bekanntmachung des Hinweises auf die Patenterteilung:
**07.03.90 Patentblatt 90/10**

(84) Benannte Vertragsstaaten:
**AT ES FR GB IT**

(56) Entgegenhaltungen:
**DE-A- 1 629 369**
**DE-A- 1 966 833**
**DE-B- 1 753 491**
**GB-A- 1 586 010**

(73) Patentinhaber: **W. Döllken & Co GmbH,**
**Ruhrtalstrasse 71, D-4300 Essen 16(DE)**

(72) Erfinder: **Eschbach, Mathias, Verusstrasse 46,**
**D-4358 Haltern(DE)**
Erfinder: **Schliehe, Wolf-Dieter, Im Werth 43,**
**D-4270 Dosten(DE)**

(74) Vertreter: **Andrejewski, Walter et al, Patentanwälte**
**Dipl.-Phys. Dr. Walter Andrejewski Dipl.-Ing. Dr.-Ing.**
**Manfred Honke Dipl.-Phys. Dr. Karl Gerhard Masch**
**Theaterplatz 3, Postfach 10 02 54, D-4300 Essen 1(DE)**

## Beschreibung

Die Erfindung bezieht sich gattungsgemäß auf ein an eine Kunststoffschneckenpresse mit zumindest einer Schneckenwelle und einem Schneckenpressengehäuse anschließbares Strangpreßwerkzeug zum Strangpressen eines marmorierten Profils aus thermoplastischem Kunststoff, wobei der Marmorierungskunststoff eine andere Farbstoffbeimischung aufweist als der Grundkunststoff, - mit Werkzeuggehäuse, zentralem Werkzeugkanal für die Aufnahme des thermoplastifizierten Grundkunststoffes, der an die Schneckenwelle anschließt, und profilgebendem Werkzeugmundstück, wobei das Werkzeuggehäuse zumindest eine Bohrung besitzt, in die eine Düse für die Einführung des thermoplastifizierten Marmorierungskunststoffes eingesetzt ist. - Es versteht sich, daß der Marmorierungskunststoff besonders aufbereitet und der Düse für die Einführung des thermoplastifizierten Marmorierungskunststoffes zugeleitet wird. Im allgemeinen erfolgt diese Aufbereitung in einem besonderen Extruder.

Bei dem bekannten gattungsgemäßen Strangpreßwerkzeug (GB 15 86 010) mündet die Düse für die Einführung des Marmorierungskunststoffes in der Wand des zentralen Werkzeugkanals, d. h. gleichsam in der Oberfläche des Strangs aus thermoplastifiziertem Grundkunststoff, der von der Schneckenstrangpresse in den zentralen Werkzeugkanal hineingedrückt wird. Der zentrale Werkzeugkanal ist glatt.

Der Grundkunststoff, der in diesen zentralen werkzeugkanal eingedrückt wird, bringt aus der Kunststoffschnekkenpresse einen Drall mit. Je nach der Viskosität der thermoplastischen Kunststoffe, mit denen gearbeitet wird, genügt die Marmorierung im hergestellten Produkt nicht den Anforderungen. Insbesondere ist die Marmorierung nicht gleichsam "durch und durch" eindrucksvoll ausgeprägt.

Der Erfindung liegt die Aufgabe zugrunde, ein Strangpreßwerkzeug zu schaffen, welches zu marmorierten Profilen führt, die allen Anforderungen genügen und bei denen die Marmorierung insbesondere "durch und durch" ausreichend ausgeprägt ist.

Zur Lösung dieser Aufgabe lehrt die Erfindung, daß die Düse für die Einführung des thermoplastifizierten Marmorierungskunststoffes fingerartig quer zur Strangpreßrichtung des Grundkunststoffes in den zentralen Werkzeugkanal hineinragt und mehrere Düsenbohrungen aufweist, die in unterschiedlichen Querschnittsbereichen in dem zentralen Werkzeugkanal münden, und daß die Wandung des zentralen Werkzeugkanals mit drallerzeugenden Profilierungen oder Einbauten versehen ist. Nach bevorzugter Ausführungsform der Erfindung ist, in Strangpreßrichtung betrachtet, im Anschluß an die drallerzeugenden Profilierungen oder Einbauten, vor dem profilgebenden Werkzeugmundstück eine Lochscheibe mit einer Mehrzahl von über den Querschnitt verteilten Bohrungen angeordnet. Der zentrale Werkzeugkanal kann, bis auf die drallerzeugenden Profilierungen oder Einbauten, eine zylindrische Form aufweisen. Eine andere Ausführungsform ist in dieser Hinsicht dadurch gekennzeichnet, daß der zentrale Werkzeugkanal einen zum profilgebenden Werkzeugmundstück hin enger werdenden Querschnitt aufweist. Ist bei dieser Ausführungsform eine Lochscheibe vorgesehen, so lehrt die Erfindung, daß die Bohrungen der Lochscheibe nach Maßgabe der Verengung des Querschnittes des zentralen Werkzeugkanals schräg geführt sind.

Die erreichten Vorteile sind darin zu sehen, daß bei Arbeiten mit einem erfindungsgemäßen Strangpreßwerkzeug marmorierte Profile entstehen, deren Marmorierung allen Anforderungen genügt und insbesondere "durch und durch" eindrucksvoll ausgeprägt ist.

Im folgenden wird die Erfindung anhand einer lediglich ein Ausführungsbeispiel darstellenden Zeichnung ausführlicher erläutert. Es zeigen in schematischer Darstellung

Fig. 1 einen Längsschnitt durch ein erfindungsgemäßes Strangpreßwerkzeug,
Fig. 2 eine andere Ausführungsform des Gegenstandes der Fig. 1, ausschnittsweise.

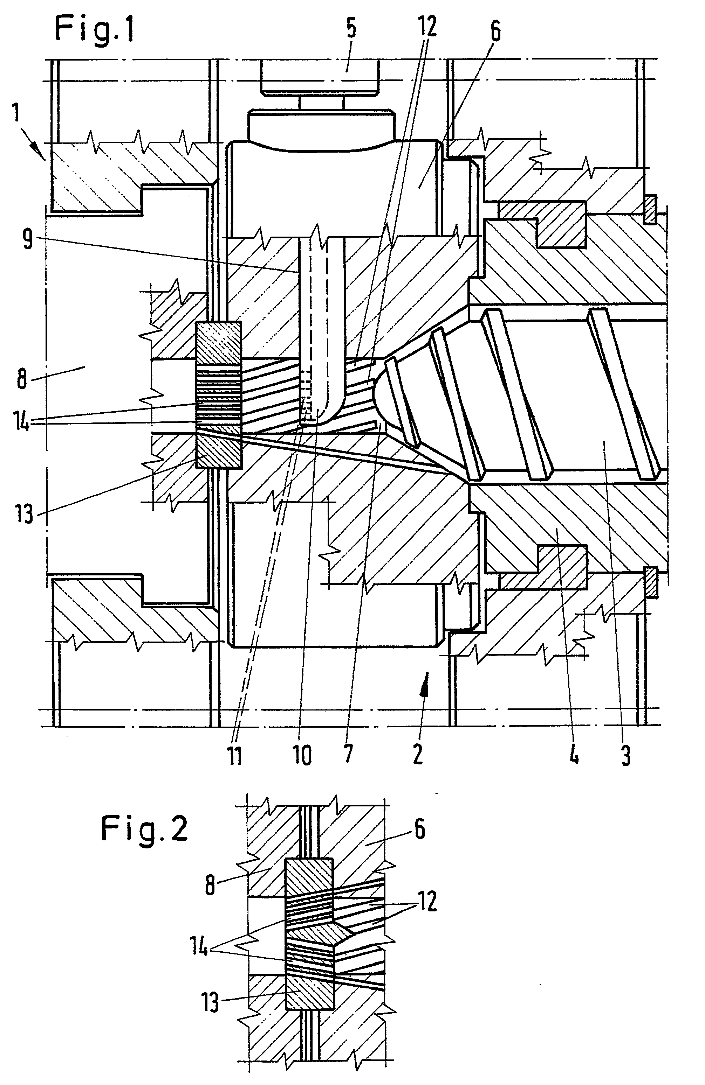

Das in den Figuren dargestellte Strangpreßwerkzeug 1 dient zum Strangpressen eines marmorierten Profils aus thermoplastischem Kunststoff. Das Strangpreßwerkzeug 1 ist an eine Kunststoffschneckenpresse 2 mit einer Schneckenwelle 3 und einem Schneckenpressengehäuse 4 anschließbar. In Fig. 1 rechts sind die vorgenannten Bauteile einer solchen Kunststoffschneckenpresse 2 ausschnittsweise dargestellt. In einer Kunststoffschneckenpresse 2 wird der Grundkunststoff thermoplastifziert. Im übrigen wird ein Marmorierungskunststoff der eine andere Farbstoffbeimischung aufweist als der Grundkunststoff, eingeführt. Das geschieht auf besondere, weiter unten erläuterte Art und Weise. Der Marmorierungskunststoff mag in der in Fig. 1 oben angedeuteten Kunststoffschneckenpresse 5 aufbereitet werden.

Zum grundsätzlichen Aufbau des Strangpreßwerkzeugs 1 gehören ein Werkzeuggehäuse 6, ein zentraler Werkzeugkanal 7 für die Aufnahme des thermoplastifizierten Grundkunststoffes, der an die Schneckenwelle 3 anschließt, und ein profilgebendes Werkzeugmundstück 8, das nicht vollständig dargestellt wurde. Das Werkzeuggehäuse 6 besitzt eine Bohrung 9, in die eine Düse 10 für die Einführung des thermoplastifizierten Marmorierungskunststoffes eingesetzt ist. Aus der Fig. 1 entnimmt man, daß die Düse 10 für die Einführung des thermoplastifizierten Marmorierungskunststoffes fingerartig quer zur Strömungrichtung des Grundkunststoffes in den zentralen Werkzeugkanal 7 hineinragt und mehrere Düsenbohrungen 11 aufweist. Diese münden in unterschiedlichen Querschnittsbereichen in den zentralen Werkzeugkanal 7. Die Wandung des zentralen Werkzeugkanals 7 ist mit drallerzeugenden Profilierungen 12 versehen. Im Ausführungsbeispiel und nach bevorzugter Ausführungsform der Erfindung ist, in Strangpreßrichtung betrachtet, im Anschluß an die drallerzeugenden Profilierungen 12 vor dem profilgebenden Werkzeugmundstück 8 eine Lochscheibe 13 mit einer Mehrzahl von über den Querschnitt verteilten Bohrungen 14 vorgesehen. In der Fig. 1 weist der zentrale Werkzeugkanal 7, bis auf die Profilierungen 12, eine zylindrische Form auf. Bei der Ausführungsform nach Fig. 2 ist die Anordnung so getroffen, daß der zentrale Werkzeugkanal 7 einen zum profilgebenden Werkzeugmundstück 8 hin enger werdenden Querschnitt aufweist. Bei dieser Ausführungsform sind die Bohrungen 14 der Lochscheibe 13 nach Maßgabe der Verengung des Querschnittes des zentralen Werkzeugkanals 7 schräg geführt.

## Patentansprüche

1. An eine Kunststoffschneckenpresse (2) mit zumindest einer Schneckenwelle (3) und einem Schneckenpressengehäuse (4) anschließbares Strangpreßwerkzeug (1) zum Strangpressen eines marmorierten Profils aus thermoplastischem Kunststoff, wobei der Marmorierungskunststoff eine andere Farbstoffbeimischung aufweist als der Grundkunststoff, - mit Werkzeugehäuse, zentralem Werkzeugkanal für die Aufnahme des thermoplastifizierten Grundkunststoffes, der an die Schneckenwelle anschließt und profilgebendem Werkzeugmundstück (8), wobei das Werkzeuggehäuse (6) zumindest eine Bohrung (9) besitzt, in die eine Düse (10) für die Einführung des thermoplastifizierten Marmorierungskunststoffes eingesetzt ist, **dadurch gekennzeichnet,** daß die Düse (10) für die Einführung des thermoplastifizierten Marmorierungskunststoffes fingerartig quer zur Strangpreßrichtung des Grundkunststoffes in den zentralen Werkzeugkanal (7) hineinragt und mehrere Düsenbohrungen (11) aufweist, die in unterschiedlichen Querschnittsbereichen in dem zentralen Werkzeugkanal (7) münden, und daß die Wandung des zentralen Werkzeugkanals (7) mit drallerzeugenden Profilierungen (12) oder Einbauten versehen ist.

2. Strangpreßwerkzeug nach Anspruch 1, dadurch gekennzeichnet, daß, in Strangpreßrichtung betrachtet, im Anschluß an die drallerzeugenden Profilierungen (12) oder Einbauten, vor dem profilgebenden Werkzeugmundstück (8) eine Lochscheibe (13) mit einer Mehrzahl von über den Querschnitt verteilten Bohrungen (14) angeordnet ist.

3. Strangpreßwerkzeug nach einem der Ansprüche 1 oder 2, dadurch gekennzeichnet, daß der zentrale Werkzeugkanal (7), bis auf die drallerzeugenden Profilierungen (12) oder Einbauten, eine zylindrische Form aufweist.

4. Strangpreßwerkzeug nach einem der Ansprüche 1 oder 2, dadurch gekennzeichnet, daß der zentrale Werkzeugkanal (7) einen zum profilgebenden Werkzeugmundstück (8) hin enger werdenden Querschnitt aufweist.

5. Strangpreßwerkzeug nach Anspruch 4 in der Ausführungsform mit Lochscheibe im Anschluß an die drallerzeugenden Profilierungen oder Einbauten, dadurch gekennzeichnet, daß die Bohrungen (14) der Lochscheibe (13) nach Maßgabe der Verengung des Querschnittes des zentralen Werkzeugkanals (7) schräg geführt sind.

## Revendications

1. Filière de boudineuse (1) pour boudiner un profil marbré en matière thermoplastique pouvant être raccordée à une boudineuse (2) pour matières plastiques avec au moins un arbre de vis sans fin (3) et un carter de boudineuse (4), la matière plastique de marbrage présentant une autre addition de colorant que la matière plastique de base – comprenant un carter de filière, un canal central de filière pour la réception de la matière plastique de base thermoplastifiée lequel fait suite à l'arbre de vis sans fin, et une embouchure de filière (8) définissant le profil, le carter de filière (6) présentant au moins un alésage (9) dans lequel est montée une buse (10) pour l'injection de la matière plastique de marbrage thermoplastifiée, caractérisée par le fait que la buse (10) pour l'injection de la matière plastique de marbrage thermoplastifiée dépasse, à la manière d'un doigt, transversalement à la direction d'extrusion dans le canal central (7) de la filière et présente une pluralité d'alésages de buse (11) qui débouchent dans différentes zones de la section transversale dans le canal central (7) de la filière, et que la paroi du canal central (7) de la filière est munie de profils (12) ou de chicanes provoquant la torsion.

2. Filière de boudineuse selon la revendication 1, caractérisée par le fait que, vu dans la direction d'extrusion, un disque à trous (13) avec une pluralité de perforations (14) réparties sur la section transversale est disposé en aval des profils (12) ou chicanes provoquant la torsion et en amont de l'embouchure de filière (8) qui définit le profil.

3. Filière de boudineuse selon l'une des revendications 1 ou 2, caractérisée par le fait que le canal central (7) de la filière présente une forme cylindrique, abstraction faite des profils (12) ou chicanes provoquant la torsion.

4. Filière de boudineuse selon l'une des revendications 1 ou 2, caractérisée par le fait que le canal central (7) de la filière présente une section transversale qui se rétrécit en direction de l'embouchure de filière (8) qui définit le profil.

5. Filière de boudineuse selon la revendication 4, dans le mode de réalisation avec disque à trous monté en aval des profils ou chicanes provoquant la torsion, caractérisée par le fait que les perforations (14) du disque à trous (13) sont inclinées en fonction du rétrécissement de la section transversale du canal central (7) de la filière.

## Claims

1. An extrusion press tool (1) attachable to a plastics screw press (2) with at least one spiral shaft (3) and a screw press housing (4), for the extrusion of a marbled profile of thermoplastic plastics material, in which the marbling plastics material contains a colouring matter admixture other than that of the basic plastics material, – with a tool housing, a central channel in the tool, adjoining the spiral shaft, for reception of the thermoplasticized basic plastics material, and a tool orifice (8) that produces the profile, in which the tool housing (6) possesses at least one borehole (9) into which a nozzle (10) is inserted for the introduction of the plasticized marbling plastics material, characterized in that the nozzle (10) for the introduction of the thermoplasticized marbling plastics material projects like a finger into the central tool channel (7) transversely to the extrusion direction of the basic plastics material and possesses several nozzle holes (11) that open into the central tool channel (7) at different parts of its cross-section, and that the wall of the central tool channel (7) is provided with profiles (12), or components, that have a rifling effect.

2. An extrusion press tool according to Claim 1, characterized in that a perforated disc (13) with a number of holes (14) distributed over its section is located following the end of the rifling-effect-producing profiles (12) or components and before the profile-producing tool orifice (8), as seen in the direction of extrusion.

3. An extrusion press tool according to one of Claims 1 or 2, characterized in that the central tool channel (7) is of cylindrical shape where it has the rifling-effect-producing profiles (12) or components.

4. An extrusion press tool according to one of Claims 1 or 2, characterized in that the central tool channel (7) has a cross-section that becomes narrower towards the profile-producing orifice (8).

5. An extrusion press tool according to Claim 4 in the form of construction with a perforated disc following the rifling-effect-producing profiles or components, characterized in that the holes (14) in perforated disc (13) run obliquely in accordance with the reduction of cross-section of the central tool channel (7).

Fig.1

Fig.2